# EUROPEAN PATENT SPECIFICATION

(11) **EP 0 486 914 B1**
(45) Date of publication and mention of the grant of the patent: **10.04.1996**
(21) Application number: 91119170.8
(22) Date of filing: 11.11.1991
(51) Int. Cl.: C08L 51/00, C08L 25/02, C08L 23/02

(54) **Thermoplastic compositions based on polyolefin and vinyl-aromatic polymer**
Thermoplastische Zusammensetzungen auf Basis von Polyolefin und vinylaromatischen Polymeren
Compositions thermoplastiques à base de polyoléfine et les polymères de vinyles aromatiques

(30) Priority: 12.11.1990 IT 2202290
(43) Date of publication of application: 27.05.1992
(73) Proprietor: ENICHEM S.p.A., I-20124 Milano (IT)
(72) Inventor: Ghidoni, Dario, I-46020 Gonzaga, Mantova (IT); Fasulo, Gian Claudio, I-46010 San Silvestro, Mantova (IT); Longo, Aldo, I-46100 Mantova (IT); Borghi, Italo, I-44100 Ferrara (IT)
(74) Representative: Barz, Peter, Dr.

(56) References cited:
- EP-A- 0 195 829
- EP-A- 0 291 352
- EP-A- 0 421 359

## Description

The present invention relates to thermoplastic compositions based on polyolefin and vinyl-aromatic polymer.

More particularly, the present invention relates to thermoplastic compositions showing an excellent combination of properties, including thermoformability, moldability, thermal resistance, modulus, resilience, resistance to naturally occuring organic substances which tend to accelerate the degradation of some polymers, etc.

Said combination of properties makes the compositions of the present invention particularly suitable for the production of shaped articles by any forming technique known for thermoplastic resins, such as thermoforming, injection molding, forging, rotational molding and the like.

As is known, vinyl-aromatic polymers are thermoplastic resins suitable for being transformed, under heating, into shaped articles by injection or extrusion molding. Said vinly-aromatic polymers have a fair tenacity, but they are not suitable for use in applications where a high tenacity associated with good chemical resistance is required.

One way of avoiding this lack of properties is to provide blends with other polymers having the missing properties so as to obtain a material exhibiting the desired combination of properties. However, this approach has been successful only in a limited number of cases; generally, in fact, the blending results in a combination of the worst characteristics of each component, the overall result being a material of such poor properties that it is of no practical or commercial value any more.

The reason for this failure is that not all polymers are compatible with each other and, therefore, do not perfectly adhere to each other. As a result, interfaces are formed between the components of the blend, which interfaces represent weakness and breaking points.

More particularly, the blending of polystyrene or generally of a vinyl-aromatic polymer or copolymer, either as such or rendered impact-resistant by grafting with a rubber, with polyolefin results in blends showing a heterogeneous structure and mechanical weakness, due to the incompatibility of these two types of polymers.

Many attempts to solve the incompatibility problem have been made by blending defined amounts of the two resins and making use of so-called compatibilizing agents.

Thus, for example, US-A 4,386,187 and 4,386,188 describe the use of a styrene-butadiene-styrene block copolymer as compatibilizing agent for polyolefin and vinyl-aromatic polymer.

EP-A-60,524 and JP-A-49-28637/1974 describe the use of styrene-butadiene block copolymers to compatibilize blends of a polyolefin with high impact polystyrene or styrenic resins.

EP-A-291,352 discloses polymeric compositions comprising a polyolefin and a vinyl-aromatic polymer and containing, as elastomeric component, small quantities of a vinyl-aromatic monomer-conjugated diene linear block copolymer, wherein a vinyl-aromatic monomer-conjugated diene star-shaped block copolymer is used as compatibilizing agent.

GB-A-1,363,466 and US-A-4,020,025 propose hydrogenated styrene-butadiene di-block copolymers as compatibilizing agents for polyolefin / styrenic polymer blends.

According to EP-A-60525 and US-A-4,188,432 a hydrogenated styrene-butadiene-styrene block copolymer, i.e., a styrene-ethylene-butylene-styrene copolymer, is blended with styrenic and olefinic polymers.

In general, however, these approaches have not been successful on an industrial scale since the resulting blends, even if homogeneous, do not exhibit a satisfactory combination of properties or have other undesirable properties.

EP-A-195,829 describes the use of an alpha-olefin copolymer which is grafted with a vinyl-aromatic polymer as compatibilizing agent for polyolefin / vinyl-aromatic polymer blends. The corresponding compositions comprise at least 20% by weight (preferably between 20 and 90%) of a polyolefin; at least 5% by weight (preferably between 5 and 75%) of a vinyl-aromatic polymer and from 2 to 15% by weight of said grafted copolymer.

Also the compositions thus obtained, however, do not exhibit a satisfactory combination of properties for all of the intended applications. In particular, an acceptable level of resilience (IZOD) may be reached by using an excess of polyolefin; this increase, however, occurs at the expense of the modulus. By increasing, on the other hand, the amount of vinyl-aromatic polymer, the modulus of the composition increases, but at the expense of the resilience thereof, said resilience assuming values of no interest.

It has now, surprisingly, been found that thermoplastic polyolefin vinyl-aromatic polymer compositions having an optimum combination of properties and being suitable, therefore, for use in all fields wherein high physico-mechanical characteristics are required, may be obtained by using a particular type of high-impact vinyl-aromatic polymer and, as compatibilizing agent, an olefinic elastomer containing a vinyl-aromatic polymer grafted thereon in a certain molar ratio.

The present invention, therefore, provides thermoplastic compositions endowed with an excellent combination of physical, mechanical and thermal properties, said compositions comprising:
- from 40 to 80% by weight of vinyl-aromatic polymer (A) prepared by polymerizing a vinyl-aromatic monomer in the presence of from 0.5 to 5% by weight of vinyl-aromatic monomer-conjugated diene linear block copolymer and from 5 to 15% by weight of diene rubber;
- from 5 to 50% by weight of polyolefin (B); and
- from 10 to 50% by weight of olefinic elastomer (C) containing a vinyl-aromatic polymer grafted thereon, the molar ratio vinyl-aromatic polymer / olefinic elastomer in the grafted phase being at least (and preferably greater than) 0.8;
the sum of the three components (A), (B) and (C) being equal to 100%.

Peferably, the thermoplastic composition of the present invention comprises the above components (A), (B) and (C) in the following proportions, with respect to the sum of the three components:
- from 50 to 70% by weight of vinyl-aromatic polymer (A);
- from 10 to 30% by weight of polyolefin (B); and
- from 10 to 40% by weight of olefinic elastomer containing a vinyl-aromatic polymer grafted thereon (C);
the sum of components (A), (B) and (C) being equal to 100%.

The vinyl-aromatic polymer (A) may be prepared by carrying out the polymerization of one or more vinyl-aromatic monomers of general formula (I): 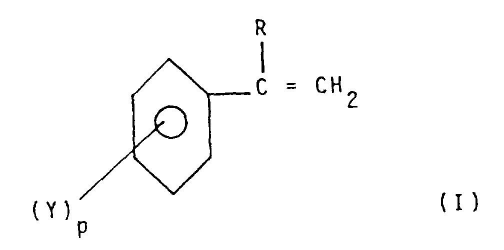 wherein R represents hydrogen or C₁-C₄ alkyl (e.g., methyl or ethyl); p is zero or an integer of from 1 to 5; and Y represents halogen (e.g. F or Cl) or C₁-C₄ alkyl (e.g. methyl or ethyl); in the presence of a diene rubber and a vinyl-aromatic monomer-conjugated diene linear block copolymer, in the ratios given above, optionally in the presence of conventional radicalic polymerization initiators.

Specific examples of vinyl-aromatic monomers of general formula (I) are styrene; methyl-styrene; mono-, di-, tri-, tetra- and penta-chlorostyrene and the corresponding alpha-methyl-styrenes; styrenes alkylated in the nucleus and the corresponding alpha-methyl-styrenes such as ortho- and para-methyl-styrenes, ortho- and para-ethyl-styrenes; ortho- and para-methyl-alpha-methyl-styrenes, and the like. These mononers may be used either alone or in admixture with each other or with other copolymerizable co-monomers such as, for instance, maleic anhydride, acrylonitrile, methacrylonitrile an C₁-C₄ alkyl esters of acrylic or methacrylic acid.

The amount of diene rubber which, e.g, may be polybutadiene, low, medium or high viscosity cis-polybutadiene, polyisoprene, a copolymer of butadiene and/or isoprene with styrene or with other monomers, preferably ranges from 7 to 12% by weight.

The vinyl-aromatic monomer-conjugated diene linear block copolymer is preferably present in amounts of from 2 to 5% by weight. It is per se well known in the art and available on the market. These linear block copolymers usually contain from 20 to 75% by weight of recurring units derived from vinyl-aromatic monomer and, correspondingly, from 80 to 25% by weight of recurring units derived from a conjugated diene.

These block copolymers can, e.g., be composed of by pure blocks only or can optionally include random or tapered polymeric segments (B/S) or can be constituted by random and/or tapered copolymers.

The above linear block copolymers are described, e.g., by Allen Noshay & James E. McGrath in "Block Copolymers", 1977, pages 83-92 and 186-192.

Further information regarding the properties, structure and characteristics of these linear block copolymers is given by Holden et al. in "Thermoplastic Elastomers" published by N.R. Legge et al., 1987.

Linear block copolymers of this type are available on the market, for example, as "SOLIPRENE^{(R)} 1205", "SOLIPRENE^{(R)} 308" and "SOLIPRENE^{(R)} 314 (Phillips Petroleum).

The preparation of the vinyl-aromatic polymer (A) can be carried out, e.g., according to any known suspension, bulk-suspension or continuous bulk polymerization process.

A preferred method of preparation comprises the prepolymerization of the vinyl-aromatic monomer, in the presence of conventional free radical catalysts, of the dienic rubber and of the above block copolymer, in a first reactor up to a conversion of less than 50% by weight of the fed monomers. The polymerization is then completed in one or more subsequent reactors. The polymer thus obtained may then be devolatilized and granulated.

The polyolefins (B) suitable for use in the blends according to the present invention are well known in the art. These polyolefins include, for example, homopolymers of α-olefins having 2 to 8 carbon atoms such as ethylene, propylene and butene, the copolymers of two or more of these monomers as well as the copolymers of one or more of these monomers with one or more different monomers copolymerizable therewith. Said copolymerizable monomers include, for example, olefin monomers having from 9 to 25 carbon atoms, ethylenically unsaturated carboxylic acids (both mono- and di-functional) as well as derivatives of these acids, such as esters and anhydrides. Exemplary monomers which can be copolymerized are acrylic acid, methacrylic acid, esters thereof, vinyl acetate and maleic anhydride and the like. The preferred olefin copolymers contain at least 50%, and more preferably at least 75% by weight of ethylene, propylene and/or butene.

Particularly preferred polyolefins include polyethylenes such as linear low density polyethylene (LLDPE), medium density or high density polyethylene. Other polyolefins such as polypropylene and polybutene as well as ethylene-propylene copolymers and ethylene-vinyl acetate (EVA) copolymers, may also be used to advantage.

In component (C) of the composition of the present invention the olefinic elastomer, which constitutes the substrate onto which the vinyl-aromatic polymer is grafted, preferably is a rubber-like copolymer of at least two different (straight-chain) alpha-mono-olefins (such as ethylene, propylene, butene-1, octene-1 and the like) and at least one other monomer copolymerizable therewith (generally a polyene and typically a non-conjugated diene) which copolymer has a Mooney viscosity (ML-4) at 100°C ranging from 10 to 150. Preferably one of the alpha-mono-olefins is ethylene.

The weight ratio of ethylene to the other alpha-mono-olefin(s) in the rubber-like copolymer usually is in the range of from 20/80 to 80/20. Particularly preferred copolymers are ethylene/propylene/non-conjugated diene (polyene) terpolymers in which the non-conjugated diene (polyene) can be cyclic or acyclic, such as 5-methylene-2-norbornene; 5-ethylidene-2-norbornene; 5-isopropylene-2-norbornene; pentadiene-1,4; hexadiene-1,4; hexadiene-1,5; heptadiene-1,5; dodecatriene-1,7,9; methyl-heptadiene-1,5; norbornadiene-2,5; cyclo-octadiene-1,5; dicyclopentadiene; tetrahydroindene; 5-methyl-tetrahydroindene; etc. The diene content of the rubber-like terpolymer preferably ranges from about 2 to 20% by weight, particularly from 8 to 18% by weight. Particularly favourable results may be obtained by using a rubber-like terpolymer having a Mooney viscosity (ML-4), determined at 100°C, of from 30 to 90 and an iodine number of at least (and preferably higher than) 5 and particularly ranging from 10 to 40. The graft or superstrate portion of component (C) is a vinyl-aromatic polymer as defined above.

The grafting of the vinyl-aromatic polymer onto the elastomeric substrate may be carried out by any of the grafting techniques generally known in the art. Thus, the olefinic elastomeric component can be contacted with the vinyl-aromatic monomer(s) in a polymerization system of well-known bulk, bulk-solution, suspension, bulk-suspension types or the like.

In general, the grafting reaction can be of the free radical (i.e. thermal), chemical, radiation initiated, anionic or Friedel-Crafts type.

The grafting techniques of vinyl monomers on olefinic substrates are well known and described, for example, in US-A-3,489,822; 3,489,821; 3,642,950; 3,819,765; 3,538,190; 3,538,191; 3,538,192; 3,671,608; 3,683,050; 3,876,727; and 4,340,669.

It is to be understood that in the grafting polymerization not all of the vinyl-aromatic monomer will be grafted onto the rubber-like substrate; a portion of the monomer will form a free polymer which is present in physical admixture with the graft copolymer. Preferably, the average molecular weight of the grafted vinyl-aromatic polymer is similar (about equal) to that of the non-grafted polymer.

In order to achieve the objects of the present invention, it is necessary that, as already mentioned, the vinyl-aromatic polymer / olefinic elastomer molar ratio in the grafted phase be at least 0.8 and preferably said ratio ranges from 1 to 2.

This ratio can be regulated by carrying out the grafting of the vinyl-aromatic monomer(s) onto the olefinic elastomer in the presence of variable amounts of initiator, solvent and/or chain transfer agent, as described, e.g., in IT-A-1,007,901, "La Chimica e l'Industria" Vol 47, no. 4, 1965 and Vol. 59, no. 7, 9 and 10, 1977.

The molecular weight of the vinyl-aromatic polymer grafted onto the olefinic substrate can influence the properties of the compositions; particularly satisfactory results may be obtained with vinyl-aromatic polymers having an average molecular weight of at least about 50,000 and up to about 500,000 and, preferably, a molecular weight which is similar to (about equal to) that of the vinyl-aromatic polymer of component (A).

In addition to components (A), (B) and (C), the compositions of the present invention can contain reinforcing additives such as, for example, glass fibres, carbon fibres, organic and inorganic high-modulus fibres, metal fibres, inorganic fillers, etc. as well as antiflame agents, dyes, pigments, stabilizers, lubricants, etc., which are well-known to those skilled in the art.

The reinforcing additives are used in amounts generally not exceeding 50% by weight and preferably not higher than 30% by weight, calculated on the total composition.

Particularly preferred reinforcing additives are glass fibres which may be untreated or, even better, treated with silanes or titanates, as is well-known in the art.

Suitable stabilizers to be used in the compositions of the present invention comprise the known thermal and oxidation stabilizers which are suitable and generally utilized for vinyl-aromatic polymers and/or polyolefins. For example, phosphites, phosphonites and/or hindered phenols can be added to the compositions of the present invention in amounts which usually range from 0.05 to 5% by weight.

The method for producing the compositions of the present invention is not critical and any conventional method is utilizable.

Generally, mixing is carried out in the molten state with preliminary pre-mixing at room temperature. Time and temperature are selected and determined as a function of the composition. The temperatures are generally in the range of from about 180 to about 300°C.

Any known mixing unit can be utilized and the process can be continuous or discontinuous. Specifically, single-screw and double-screw extruders, Banbury mixers, mixing rollers, Brabender plastographs and the like can be used to advantage.

The compositions of the present invention are easily processable by injection molding or by extrusion and exhibit a combination of properties which make them suitable for use in the manufacture of shaped articles having a high impact strength along with a satisfactory stiffness and chemical resistance. Thanks to these properties, the compositions of the present invention are particularly suitable in the fields of food packaging and refrigerants.

The following non-limiting examples are to further illustrate the present invention.

### EXAMPLES 1 TO 3

In a blender of the rotating drum type the following components were blended at room temperature and in the amounts listed in Table I:
- an impact-resistant styrene polymer (A) containing, dispersed in the polymeric matrix, 7.75% by weight of a polybutadiene rubber and 3% of a linear block copolymer (SOLIPRENE^{(R)} 1205; Phillips Petroleum) containing 25% of styrene and 75% of butadiene and having an average molecular weight of 75,000;
- a linear low density polyethylene (LLDPE) (B) having a density of 0.926 g/cm³ and a M.F.I. (Melt Flow Index) of 0.7 g / 10 min. (at 190°C - 2.16 kg); and
- a polystyrene-grafted EPDM elastomer (C) having the following composition: 50% by weight of EPDM (Mooney viscosity (ML-4) at 100°C of 62-72, and iodine number of 18), 42% by weight of grafted polystyrene and 8% by weight of free polystyrene having an average molecular weight (Mw) equal to 273,000, the polystyrene / elastomer molar ratio in the grafted phase being 1.14.

The resulting blends were homogenized in a Brabender plastograph equipped with a 50 ml cell heated at 200°C.

The Brabender mastication speed was 80 r.p.m. and the residence time of the blend in the plastograph was 3 minutes.

The resulting blends were ground, compression molded at 180°C and characterized; the determined properties are listed in Table I.

In Table I, the measured characteristics and the employed methods were as follows:

### Mechanical properties

There were determined the IZOD notch resiliency at 23°C, according to ASTM D-256, on 3.2 mm thick specimens; the ultimate tensile strength and the elastic modulus according to ASTM D-790.

### Thermal properties

The VICAT softening temperature was determined at 1 kg and at 5 kg in oil, according to ISO 306.

**TABLE I**

| | | Ex. 1 | Ex. 2 | Ex. 3 |
|---|---|---|---|---|
| COMPONENT A | | 75 | 66.7 | 58.3 |
| COMPONENT B | | 15 | 13.3 | 11.7 |
| COMPONENT C | | 10 | 20 | 30 |
| MECHANICAL PROPERTIES | UNITS | | | |
| - IZOD | J/m | 102 | 184 | 400 |
| - Ultimate tensile strength | N/mm | 32.5 | 32 | 30 |
| - Elastic modulus | N/mm | 1600 | 1550 | 1350 |
| THERMAL PROPERTIES | | | | |
| - VICAT at 1 kg | °C | 102 | 101.5 | 101 |
| - VICAT at 5 kg | °C | 89 | 88 | 83 |

The polystyrene / elastomer molar ratio in the grafted phase of component (C) was determined by first removing all materials other than polystyrene (both grafted and free) and EPDM rubber (both grafted and ungrafted). For this purpose, 0.5 g of component (C) were dissolved in 5 ml of toluene, and to the resulting solution 3 ml of acetone were added. The polymers were then precipitated by slowly adding 10 ml of 2-propanol. The resulting mixture was centrifuged and the clear solvent was decanted from the precipitate and discarded.

Next, the free polystyrene was separated from the EPDM rubber and the graft copolymer by selective precipitation.

For this purpose, the precipitate from above was dissolved in 5 ml of toluene. With agitation, 7 ml of a methyl ethyl ketone / acetone solution (by volume 1:1) were slowly added, resulting in a very fine dispersion. About 15 ml of a methanol / methyl ethyl ketone / acetone solution (volume ratio 1:2:2) were slowly added with agitation until the coagulation of a white precipitate started. The resulting mixture was centrifuged and the clear supernatant liquid was decanted from the precipitate. The supernatant liquid contained the free polystyrene which could be characterized by gel permeation chromatography. The precipitate contained the free EPDM rubber as well as the EPDM-polystyrene graft copolymer. The graft copolymer to rubber ratio of this sample could be determined by infrared spectroscopy. The percentage of the rubber which was grafted with polystyrene was then calculated via a statistical method using the graft copolymer to rubber ratio, the molecular weight of the EPDM rubber and the molecular weight of the polystyrene, assuming that the free polystyrene and grafted polystyrene had the same molecular weight. This statistical method is described by L. H. Tung and R. M. Wiley in "Journal of Polymer Science, Polymer Physics Edition", Volume 11, page 1413, 1973.

### EXAMPLES 4 TO 6

The above procedure was repeated in order to prepare blends containing the same components as those of examples 1 to 3 with the exception that the EPDM elastomer containing polystyrene grafted thereon (component C₁) had the following composition: 50% by weight of EPDM (Mooney viscosity (ML-4) at 100°C of 62 to 72 and iodine number of 18), 43% by weight of grafted polystyrene and 7% by weight of free polystyrene having a weight average molecular weight (Mw) of 360,000, the polystyrene / elastomer molar ratio in the grafted phase being equal to 1.2.

The characteristics of the blends thus obtained were as follows:

**TABLE II**

| | | Ex. 4 | Ex. 5 | Ex. 6 |
|---|---|---|---|---|
| COMPONENT A | | 75 | 66.7 | 58.3 |
| COMPONENT B | | 15 | 13.3 | 11.7 |
| COMPONENT C₁ | | 10 | 20 | 30 |
| MECHANICAL PROPERTIES | UNITS | | | |
| - IZOD | J/m | 84 | 170 | 310 |
| - Ultimate tensile strength | N/mm | 34 | 31 | 32.5 |
| - Elastic modulus | N/mm | 1550 | 1500 | 1350 |
| THERMAL PROPERTIES | | | | |
| - VICAT at 1 kg | °C | 103 | 102 | 101 |
| - VICAT at 5 kg | °C | 90 | 86 | 80 |

### EXAMPLE 7

The procedure of examples 1 to 3 was repeated for preparing a blend composed of:
- 66.7% by weight of the impact resistant vinyl-aromatic polymer of examples 1 to 3;
- 13.3% by weight of polyethylene of examples 1 to 3; and
- 20% by weight of an EPDM elastomer containing polystyrene grafted thereon (component C₂) and having the following composition: 50% by weight of EPDM rubber (Mooney viscosity (ML-4) at 100°C of 62-72 and iodine number of 18), 28% by weight of grafted polystyrene and 22% of free polystyrene having a weight average molecular weight (Mw) of 207,000, the polystyrene / elastomer molar ratio in the grafted phase being 1.1.

The properties of the blend were as follows:

| | | |
|---|---|---|
| Mechanical Properties | | |
| - IZOD | 149 | J/m |
| - Ultimate tensile strength | 31.5 | N/mm |
| - Elastic modulus | 1500 | N/mm |
| Thermal Properties | | |
| - VICAT at 1 kg | 102°C | |
| - VICAT at 5 kg | 86°C | |

### EXAMPLES 8 AND 9 (comparative)

By operating according to the operative conditions of examples 1 to 3, blends were prepared which were composed of:
- 66.7% by weight of the impact resistant polymer (A) as used in examples 1 to 3:
- 13.3% by weight of linear polyethylene (B) as used in examples 1 to 3;
- 20% by weight of an EPDM elastomer containing polystyrene grafted thereon; i.e., in example 8 a polymer (C₃) of the following composition: 50% by weight of EPDM rubber (Mooney viscosity (ML-4) at 100°C of 62-72 and iodine number of 18), 47.4% by weight of grafted polystyrene and 2.6% of free polystyrene having a weight average molecular weight (Mw) of 1,320,000, the polystyrene / elastomer molar ratio in the grafted phase being 0.35; and in example 9 a polymer (C₄) of the following composition: 50% by weight of EPDM rubber (Mooney viscosity (ML-4) at 100°C of 62-72 and iodine number of 18), 41.8 by weight of grafted polystyrene and 8.2% by weight of free polystyrene having a weight average molecular weight (Mw) of 1,746,000, the polystyrene / elastomer molar ratio in the grafted phase being 0.18.

The characteristics of the blends thus obtained are listed in Table III below.

**TABLE III**

| | | Ex. 8 | Ex. 9 |
|---|---|---|---|
| COMPONENT A | | 66.7 | 66.7 |
| COMPONENT B | | 13.3 | 13.3 |
| COMPONENT C₃ | | 20 | - |
| COMPONENT C₄ | | - | 20 |
| MECHANICAL PROPERTIES | UNITS | | |
| - IZOD | J/m | 80 | 61 |
| - Ultimate tensile strength | N/mm | 32 | 33 |
| - Elastic modulus | N/mm | 1550 | 1600 |
| THERMAL PROPERTIES | | | |
| - VICAT at 1 kg | °C | 101 | 102 |
| - VICAT at 5 kg | °C | 86 | 87 |

### EXAMPLES 10 AND 11 (comparative)

By operating according to the operative modalities described in examples 1 to 3, blends were prepared which were composed of:
- 58.3% by weight of a styrene polymer (A), i.e., a crystal styrene homopolymer (A₁) or an impact-resistant styrene polymer (A₂) containing 7.75 of polybutadiene rubber;
- 11.3% of polyethylene (B) as used in examples 1 to 3; and
- 30% of the EPDM elastomer (C) as used in examples 1 to 3.

The properties of the blends thus obtained are listed in Table IV below.

**TABLE IV**

| | | Ex. 10 | Ex. 11 |
|---|---|---|---|
| COMPONENT A₁ | | 58.3 | - |
| COMPONENT A₂ | | - | 58.3 |
| COMPONENT B | | 11.3 | 11.3 |
| COMPONENT C | | 30 | 30 |
| MECHANICAL PROPERTIES | UNITS | | |
| - IZOD | J/m | 78 | 172 |
| - Ultimate tensile strength | N/mm | 35 | 26 |
| - Elastic modulus | N/mm | 1600 | 1250 |
| THERMAL PROPERTIES | | | |
| - VICAT at 1 kg | °C | 100 | 99 |
| - VICAT at 5 kg | °C | 82 | 78 |

## Claims

1. Thermoplastic composition based on polyolefin and vinyl-aromatic polymer and comprising
- from 40 to 80% by weight of vinyl-aromatic polymer (A) prepared by polymerizing a vinyl-aromatic monomer in the presence of from 0.5 to 5% by weight of vinyl-aromatic monomer-conjugated diene linear block copolymer and from 5 to 15% by weight of diene rubber;
- from 5 to 50% by weight of polyolefin (B); and
- from 10 to 50% by weight of olefinic elastomer (C) containing, grafted thereon, vinyl-aromatic polymer, the molar ratio of vinyl-aromatic polymer to olefinic elastomer in the grafted phase being at least 0.8;
the sum of components (A), (B) and (C) being 100%.

2. Composition according to claim 1, comprising:
- from 50 to 70% by weight of vinyl-aromatic polymer (A);
- from 10 to 30% by weight of polyolefin (B); and
- from 10 to 40% by weight of olefinic elastomer (C).

3. Composition according to claim 1 or 2, wherein in the vinyl-aromatic polymer the amount of diene rubber ranges form 7 to 12% by weight and/or the amount of vinyl-aromatic monomer-conjugated diene linear block copolymer ranges from 2 to 5% by weight.

4. Composition according to any one of the preceding claims, wherein the vinyl-aromatic monomer-conjugated diene linear block copolymer contains from 20 to 75% by weight of units derived from vinyl-aromatic monomer and from 80 to 25% by weight of units derived from conjugated diene.

5. Composition according to any one of the preceding claims, wherein the linear block copolymer is constituted by pure polymeric blocks of vinyl-aromatic monomer and conjugated diene monomer; or contains random and/or tapered (B/S) polymeric segments of vinyl-aromatic monomer and conjugated diene; or is constituted by random and/or tapered (B/S) copolymers of vinyl-aromatic monomer and conjugated diene.

6. Composition according to any one of the preceding claims, wherein the polyolefin (B) is a homo- or copolymer of ethylene, propylene and/or butene, particularly a low, medium or high density polyethylene.

7. Composition according to any one of the preceding claims, wherein the olefinic elastomer of component (C) is a rubber-like copolymer of at least two different straight chain alpha-mono-olefins and at least one copolymerizable polyene monomer, preferably a non-conjugated diene, and preferably has a Mooney viscosity (ML-4) at 100°C of from 10 to 150.

8. Composition according to claim 7, wherein one alpha-mono-olefin is ethylene and the weight ratio of ethylene to the other alpha-mono-olefin(s) ranges form 20/80 to 80/20.

9. Composition according to any one of the preceding claims, wherein the olefinic elastomer of component (C) is an ethylene/propylene/non-conjugated diene terpolymer having a diene content of from 2 to 20% by weight, particularly from 8 to 18% by weight, said terpolymer having a Mooney viscosity (ML-4) at 100°C of from 30 to 90 and an iodine number of at least 5 and preferably of from 10 to 40.

10. Composition according to any one of the preceding claims, wherein the vinyl-aromatic polymer contains units derived from monomers of general formula (I): 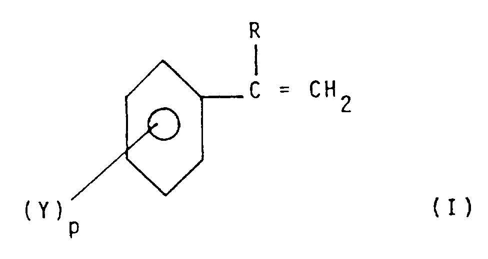 wherein:
R represents hydrogen or an alkyl group having from 1 to 4 carbon atoms;
Y represents halogen or an alkyl group having from 1 to 4 carbon atoms; and
p is 0 or an integer of from 1 to 5.

11. Composition according to any one of the preceding claims, wherein the average molecular weight of the vinyl-aromatic polymer ranges from about 50,000 to about 500,000.

12. Composition according to any one of the preceding claims wherein the molar ratio vinyl-aromatic polymer/olefinic elastomer in the grafted phase ranges from 1 to 2.

13. Composition according to any one of the preceding claims, additionally containing additives selected form reinforcing additives, flame retardants, dyes, pigments, stabilizers and lubricants.

14. Composition according to claim 13, wherein the stabilizer is of the type used for vinyl-aromatic polymers and/or for polyolefins and is present in an amount of from 0.05 to 5% by weight, based on the total composition.

15. Composition according to claim 13, wherein the reinforcing additives are selected from glass fibres, carbon fibres, organic or inorganic high-modulus fibres and metal fibres, said additives being present in an amount of not more than 50% by weight, preferably not more than 30% by weight, with respect to the total composition.

16. Shaped articles, comprising the composition of any one of the preceding claims.

## Patentansprüche

1. Thermoplastische Zusammensetzung auf der Basis von Polyolefin und vinylaromatischem Polymer und umfassend
- 40 bis 80 Gewichts-% vinylaromatisches Polymer (A), hergestellt durch Polymerisation eines vinylaromatischen Monomers in Anwesenheit von 0,5 bis 5 Gewichts-% linearem vinylaromatisches Monomer-konjugiertes Dien-Block-Copolymer und 5 bis 15 Gewichts-% Dien-Kautschuk;
- 5 bis 50 Gewichts-% Polyolefin (B); und
- 10 bis 50 Gewichts-% olefinisches Elastomer (C), das darauf aufgepfropft vinylaromatische Polymer enthält, wobei das Molverhältnis von vinylaromatischem Polymer zu olefinischem Elastomer in der gepfropften Phase mindestens 0,8 beträgt;
wobei die Summe der Komponenten (A), (B) und (C) 100% beträgt.

2. Zusammensetzung nach Anspruch 1, umfassend:
- 50 bis 70 Gewichts-% vinylaromatisches Polymer (A) ;
- 10 bis 30 Gewichts-% Polyolefin (B); und
- 10 bis 40 Gewichts-% olefinisches Elastomer (C).

3. Zusammensetzung nach Anspruch 1 oder 2, in welcher in dem vinylaromatischen Polymer die Menge an Dien-Kautschuk im Bereich von 7 bis 12 Gewichts-% liegt und/oder die Menge an linearem vinylaromatisches Monomer-konjugiertes Dien-Block-Copolymer im Bereich von 2 bis 5 Gewichts-% liegt.

4. Zusammensetzung nach irgendeinem der vorangehenden Ansprüche, in welcher das lineare vinylaromatisches Monomer-konjugiertes Dien-Block-Copolymer 20 bis 75 Gewichts-% Einheiten, die von vinylaromatischem Monomer abgeleitet sind, und 80 bis 25 Gewichts-% Einheiten, die von konjugiertem Dien abgeleitet sind, enthält.

5. Zusammensetzung nach irgendeinem der vorangehenden Ansprüche, in welcher das lineare Block-Copolymer aus reinen polymeren Blöcken von vinylaromatischem Monomer und konjugiertem Dien-Monomer aufgebaut ist; oder statistische und/oder konisch zulaufende (B/S) polymere Segmente von vinylaromatischem Monomer und konjugiertem Dien enthält; oder aus statistischen und/oder konisch zulaufenden (B/S) -Copolymeren von vinylaromatischem Monomer und konjugiertem Dien aufgebaut ist.

6. Zusammensetzung nach irgendeinem der vorangehenden Ansprüche, in welcher das Polyolefin (B) ein Homo- oder Copolymer von Ethylen, Propylen und/oder Buten, insbesondere ein Polyethylen niedriger, mittlerer oder hoher Dichte, ist.

7. Zusammensetzung nach irgendeinem der vorangehenden Ansprüche, in welcher das olefinische Elastomer von Komponente (C) ein Kautschuk-ähnliches Copolymer von mindestens zwei unterschiedlichen geradkettigen alpha-Monoolefinen und mindestens einem copolymerisierbaren Polyen-Monomer, vorzugsweise einem nicht-konjugierten Dien, ist und vorzugsweise eine Mooney-Viskosität (ML-4) bei 100°C von 10 bis 150 aufweist.

8. Zusammensetzung nach Anspruch 7, in welcher ein alpha-Monoolefin Ethylen ist und das Gewichtsverhältnis von Ethylen zu anderem bzw. anderen alpha-Monoolefin(en) im Bereich von 20/80 bis 80/20 liegt.

9. Zusammensetzung nach irgendeinem der vorangehenden Ansprüche, in welcher das olefinische Elastomer von Komponente (C) ein Ethylen/Propylen/nicht-konjugiertes Dien-Terpolymer mit einem Dien-Gehalt von 2 bis 20 Gewichts-%, insbesondere 8 bis 18 Gewichts-%, ist, wobei das Terpolymer eine Mooney-Viskosität (ML-4) bei 100°C von 30 bis 90 und eine Iodzahl von mindestens 5 und vorzugsweise 10 bis 40 aufweist.

10. Zusammensetzung nach irgendeinem der vorangehenden Ansprüche, in welcher das vinylaromatische Polymer Einheiten enthält, die von Monomeren der allgemeinen Formel (I) abgeleitet sind: 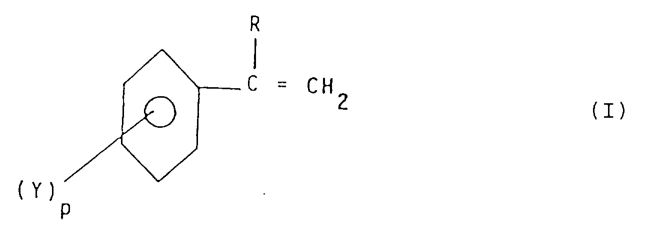 worin:
R Wasserstoff oder eine Alkylgruppe mit 1 bis 4 Kohlenstoffatomen darstellt;
Y Halogen oder eine Alkylgruppe mit 1 bis 4 Kohlenstoffatomen darstellt; und
p 0 oder eine ganze Zahl von 1 bis 5 ist.

11. Zusammensetzung nach irgendeinem der vorangehenden Ansprüche, in welcher das durchschnittliche Molekulargewicht des vinylaromatischen Polymers im Bereich von etwa 50000 bis etwa 500000 liegt.

12. Zusammensetung nach irgendeinem der vorangehenden Ansprüche, in welcher das Molverhältnis vinylaromatisches Polymer/olefinisches Elastomer in der gepfropften Phase im Bereich von bis 2 liegt.

13. Zusammensetzung nach irgendeinem der vorangehenden Ansprüche, zusätzlich Additive enthaltend, die aus verstärkenden Additiven, Flammverzögerungsmitteln, Farbstoffen, Pigmenten, Stabilisatoren und Schmiermitteln ausgewählt sind.

14. Zusammensetzung nach Anspruch 13, in welcher der Stabilisator von dem Typ ist, der für vinylaromatische Polymere und/oder für Polyolefine eingesetzt wird, und in einer Menge von 0,05 bis 5 Gewichts-%, bezogen auf die gesamte Zusammensetzung, vorhanden ist.

15. Zusammensetzung nach Anspruch 13, in welcher die verstärkenden Additive aus Glasfasern, Kohlenstoffasern, organischen oder anorganischen Fasern mit hohem Modul und Metallfasern ausgewählt sind, wobei diese Additive in einer Menge von nicht mehr als 50 Gewichts-%, vorzugsweise nicht mehr als 30 Gewichts-%, bezogen auf die gesamte Zusammensetzung, vorhanden sind.

16. Formgegenstände, umfassend die Zusammensetzung nach irgendeinem der vorangehenden Ansprüche.

## Revendications

1. Composition thermoplastique basée sur une polyoléfine et un polymère vinyl-aromatique, et comprenant :
- de 40 à 80% en poids de polymère vinyl-aromatique (A) préparé par polymérisation d'un monomère vinyl-aromatique en présence de 0,5 à 5% en poids de copolymère séquencé linéaire (monomère vinyl-aromatique)/(diène conjugué), et de 5 à 15% en poids de caoutchouc de diène,
- de 5 à 50% en poids de polyoléfine (B), et
- de 10 à 50% en poids d'élastomère oléfinique (C) contenant, greffé sur lui, un polymère vinyl-aromatique, le rapport du nombre de moles de polymère vinyl-aromatique au nombre de moles d'élastomère oléfinique dans la phase greffée valant au moins 0,8 ;
la somme des composants (A), (B), et (C) valant 100%.

2. Composition selon la revendication 1, comportant :
- de 50 à 70% en poids de polymère vinyl-aromatique (A),
- de 10 à 30% en poids de polyoléfine (B), et
- de 10 à 40% en poids d'élastomère oléfinique (C).

3. Composition conforme à la revendication 1 ou 2, dans laquelle dans le polymère vinyl-aromatique, la quantité de caoutchouc de diène se situe dans l'intervalle allant de 7 à 12% en poids, et/ou la quantité de copolymère séquencé linéaire (monomère vinyl-aromatique)/(diène conjugué) se situe dans l'intervalle allant de 2 à 5% en poids.

4. Composition conforme à l'une quelconque des précédentes revendications, dans laquelle le copolymère séquencé linéaire (monomère vinyl-aromatique)/(diène conjugué) contient de 20 à 75% en poids de motifs dérivés du monomère vinyl-aromatique, et de 80 à 25% en poids de motifs dérivés du diène conjugué.

5. Composition conforme à l'une quelconque des précédentes revendications, dans laquelle le copolymère séquencé linéaire est constitué par des séquences pures de monomère vinyl-aromatique et de monomère diène conjugué ; ou contient des segments polymères (B/S) statistiques et/ou à gradient de motifs de monomère vinyl-aromatique et de diène conjugué ; ou est constitué par des copolymères (B/S) statistiques et/ou à gradient de motifs de monomère vinyl-aromatique et de diène conjugué.

6. Composition conforme à l'une quelconque des précédentes revendications, dans laquelle la polyoléfine (B) est un homopolymère ou copolymère d'éthylène, propylène et/ou butène, en particulier un polyéthylène basse, moyenne, ou haute densité.

7. Composition conforme à l'une quelconque des précédentes revendications, dans laquelle l'élastomère oléfinique du composant (C) est un copolymère similaire au caoutchouc, constitué d'au moins deux α-mono-oléfines différentes à chaîne droite et d'au moins un monomère de polyène copolymérisable, de préférence un diène non-conjugué, et il a de préférence une viscosité de Mooney (ML-4) à 100°C comprise entre 10 et 150.

8. Composition conforme à la revendication 7, dans laquelle une α-mono-oléfine est l'éthylène, et le rapport pondéral d'éthylène à l'autre ou aux autres α-mono-oléfines est compris entre 20/80 et 80/20.

9. Composition conforme à l'une quelconque des précédentes revendications, dans laquelle l'élastomère oléfinique du composant (C) est un terpolymère éthylène/propylène/diène non-conjugué, présentant une teneur en diène de 2 à 20 % en poids, en particulier de 8 à 18% en poids, ledit terpolymère ayant une viscosité de Mooney (ML-4) à 100°C comprise entre 30 et 90, et un indice d'iode d'au moins 5, et de préférence compris entre 10 et 40.

10. Composition conforme à l'une quelconque des précédentes revendications, dans laquelle le polymère vinyl-aromatique contient des motifs dérivés de monomères de formule générale (I): 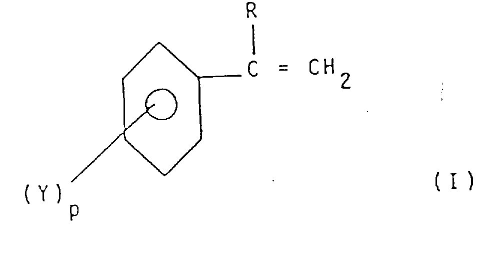 dans laquelle :
R représente un atome d'hydrogène ou un groupe alkyle comportant 1 à 4 atomes de carbone ;
Y représente un atome d'halogène ou un groupe alkyle comportant 1 à 4 atomes de carbone ; et
p vaut 0 ou un nombre entier compris entre 1 et 5.

11. Composition conforme à l'une quelconque des précédentes revendications, dans laquelle la masse moléculaire moyenne du polymère vinyl-aromatique est comprise entre environ 50 000 et environ 500 000.

12. Composition conforme à l'une quelconque des précédentes revendications, dans laquelle le rapport du nombre de moles de polymère vinyl-aromatique au nombre de moles d'élastomère oléfinique dans la phase greffée est compris entre 1 et 2.

13. Composition conforme à l'une quelconque des précédentes revendications, contenant en outre des additifs choisis parmi des agents de renforcement, ignifugeants, colorants, pigments, stabilisants, et lubrifiants.

14. Composition conforme à la revendication 13, dans laquelle le stabilisant est du type utilisé pour des polymères vinyl-aromatiques et/ou pour des polyoléfines, et il est présent en une quantité de 0,05 à 5% en poids, par rapport à la composition totale.

15. Composition conforme à la revendication 13, dans laquelle les agents de renforcement sont choisis parmi les fibres de verre, les fibres de carbone, les fibres haut-module organiques ou inorganiques, et les fibres de métal, lesdits agents étant présents en une quantité ne dépassant pas 50% en poids, de préférence ne dépassant pas 30% en poids, par rapport à la composition totale.

16. Articles façonnés, comprenant la composition conforme à l'une quelconque des précédentes revendications.
